Europäisches Patentamt

European Patent Office

Office européen des brevets

(19)

(11)  **EP 1 210 256 B1**

(12)  **EUROPÄISCHE PATENTSCHRIFT**

(45) Veröffentlichungstag und Bekanntmachung des Hinweises auf die Patenterteilung:
**06.09.2006  Patentblatt 2006/36**

(51) Int Cl.:
***B60T 8/00*** (2006.01)

(21) Anmeldenummer: **00954635.9**

(22) Anmeldetag: **17.08.2000**

(86) Internationale Anmeldenummer:
**PCT/EP2000/008022**

(87) Internationale Veröffentlichungsnummer:
**WO 2001/014187 (01.03.2001 Gazette 2001/09)**

(54)  **VERFAHREN ZUR ERKENNUNG EINER BERGAUF- ODER BERGABFAHRT EINES KRAFTFAHRZEUGES**

METHOD FOR DETERMINING THAT A MOTOR VEHICLE IS CLIMBING OR DESCENDING A SLOPE

PROCEDE PERMETTANT DE DETECTER SI UN VEHICULE AUTOMOBILE MONTE OU DESCEND UNE INCLINAISON

(84) Benannte Vertragsstaaten:
**DE FR**

(30) Priorität: **20.08.1999  DE 19939438
20.08.1999  DE 19939439
26.05.2000  DE 10026102**

(43) Veröffentlichungstag der Anmeldung:
**05.06.2002  Patentblatt 2002/23**

(73) Patentinhaber: **Continental Teves AG & Co. oHG
60488 Frankfurt (DE)**

(72) Erfinder: **KLUSEMANN, Rainer
60529 Frankfurt am Main (DE)**

(56) Entgegenhaltungen:
**EP-A- 0 774 390          DE-A- 4 209 150
US-A- 5 423 601          US-A- 5 794 170**

**Beschreibung**

Die Erfindung betrifft ein Verfahren gemäß Oberbegriff von Anspruch 1, sowie eine Vorrichtung gemäß Oberbegriff von Anspruch 10.

Moderne Kraftfahrzeuge sind mit unterschiedlichsten elektronischen Systemen zur Steuerung und Regelung des Fahrverhaltens ausgestattet. Beispiele sind Bremskraftregelsysteme (ABS), Fahrstabilitätsprogramme (ESP) und Antriebsschlupfregelungssysteme (ASR, BTCS oder TCS). Die Steuerungsprogramme, die in der Elektronik dieser Systeme vorhanden sind, werten je nach Ausführung eine Vielzahl von Sensoren, die in das Kraftfahrzeug eingebaut sind, aus. Dies sind z.B. Raddrehzahl-, Längsbeschleunigungs-, Querbeschleunigungs- und Motordrehmomentsensoren. Bei einer Antriebsschlupfregelung wird durch die Elektronik dafür gesorgt, dass bei starker Beschleunigung des Fahrzeugs die das Fahrzeug beschleunigenden Räder nicht durchdrehen. Das kann zum Einen durch Abbremsen des durchdrehenden Rades geschehen und/oder durch Drosselung der Antriebsleistung (Motormomenten-Reduktion).

Aus der EP 0 774 390 A2 ist als nächstliegender Stand der Technik ein Steuergerät für ein Antiblockier-Bremssystem in Allradfahrzeugen bekannt, welches den Bremsweg des Allradfahrzeugs bei einer Fahrt auf einem Hang verringern soll. Wird durch eine Gefälleentscheidungseinrichtung erkannt, daß sich das Fahrzeug auf einem Hang befindet/fährt/bremst, so wird von einer Standard-Antiblockiersystemsteuerung auf eine spezifizierte Antiblockiersystemsteuerung umgeschaltet. Die Gefälleentscheidungseinrichtung ermittelt u. a. aus den Radgeschwindigkeiten bzw. Radbeschleunigungen der Fahrzeugräder und aus dem Längsbeschleunigungssignal eines G-Sensors ein Kriterium für das vorliegen einer Hangfahrt.

In der DE-A 3809101 ist ein Verfahren und eine Schaltungsanordnung zur Steuerung eines ASR-Systems mit Bremsen- und Motoreingriff beschrieben. Bei diesem Verfahren wird zur Antriebsschlupfregelung die Radbremse eingesetzt und/oder in die Steuerung des Antriebsmotors eingegriffen. Die Antriebsschlupfregelung greift hierzu u. a. auf übliche Komponenten der ohnehin vorhandenen Antiblockiereinrichtung (ABS) zu. Die Kommunikation mit den benötigten Fahrzeugkomponenten (beispielsweise Motor) kann über einen an sich bekannten Fahrzeugdatenbus (CAN) erfolgen. Hierbei werden zur Durchführung des Verfahrens Sensoren zur Ermittlung des Raddrehverhaltens durch Schaltkreise zur Signalverarbeitung ausgewertet und Stellsignale zur Erzeugung von elektromagnetischen Hydraulikventilen erzeugt, die eine Steuerung der Bremskraft ermöglichen. Die Elektronik des Systems benötigt zur Berechnung der erforderlichen Stellgröße die sog. Fahrzeugreferenzgeschwindigkeit $V_{ref}$. Diese Größe wird in der Regel aus den Radgeschwindigkeiten der einzelnen Räder ermittelt. Treten besondere Fahrsituationen auf, so kann es vorkommen, daß eines oder mehrere Räder nicht mehr die aktuelle Fahrzeuggeschwindigkeit wiedergibt, da eines der Räder durchdreht. In diesem Fall ist es üblich, daß das durchdrehende Rad nicht zur Bildung der Fahrzeug-Referenzgeschwindigkeit $V_{ref}$ herangezogen wird.

Die Regelalgorithmen des ABS verwenden als wesentliche Eingangsgröße die Fahrzeuggeschwindigkeit $V_{ref}$. Weicht die Fahrzeugreferenzgeschwindigkeit von der tatsächlichen Fahrzeuggeschwindigkeit $V_t$ ab, so kann dies zu einem ungerechtfertigten Ansprechen von ABS führen, was einen Bremsdruckabbau für eine gewisse Zeit zur Folge hat. Aufgrund der damit verbundenen Gefahren sollte eine Abweichung von $V_{ref}$ und der tatsächlichen Geschwindigkeit $V_t$ sollte, wenn überhaupt, daher nur für einen möglichst kurzen Zeitraum vorliegen.

Bei den vorstehend erwähnten elektronischen Systemen zur Steuerung des Fahrzeugverhaltens wird der Einfluß einer Bergauf- oder Bergabfahrt, welcher insbesondere bei Allradfahrzeugen wichtig ist, nur unzureichend oder gar nicht berücksichtigt. Wird beispielsweise bei einer Antriebsschlupfregelung ein Durchdrehen der Antriebsräder festgestellt, so würde bei einer Bergfahrt die Fahrzeugreferenzgeschwindigkeit aufgrund einer Fehlinterpretation des Längsbeschleunigungssensors zu hoch liegen. Dies hat zur Folge, daß die Antriebsschlupfregelung nicht in ausreichendem Maße, zum Beispiel durch Motormomentreduktion auf den Antriebsschlupf reagiert. Andererseits wäre bei Bergabfahrt die ABS-Regelung zu empfindlich.

Die Erfindung setzt sich daher zum Ziel, heute übliche elektronische Systeme zur Steuerung des Fahrzeugverhaltens mit einem verbesserten Verfahren zur Erkennung des Vorliegens einer Bergauf- oder Bergabfahrt auszustatten, so daß die Fahrzeugreferenzgeschwindigkeit $V_{ref}$ schneller an $V_t$ herangeführt wird, so daß elektronische Systeme zur Steuerung der Fahrstabilität etc., die die Fahrzeugreferenzgeschwindigkeit als Eingangsgröße nutzen, zuverlässiger arbeiten.

Diese Aufgabe wird erfindungsgemäß gelöst durch ein Verfahren gemäß Anspruch 1.

Gemäß der Erfindung lässt sich das Vorliegen einer Bergauf- oder Bergabfahrt mittels ohnehin im Fahrzeug vorhandener Fahrzeugdaten, wie Daten über die Längsbeschleunigung, das Motordrehmoment oder über die Raddrehzahl, erkennen. Hierzu wird zunächst auf an sich bekannte Weise aus den Radsensorsignalen eine Fahrzeug-Referenzgeschwindigkeit $V_{ref}$ bestimmt. Hierzu kann beispielsweise die Radgeschwindigkeit des am langsamsten drehenden Rades herangezogen werden. Aus dieser Fahrzeugreferenzgeschwindigkeit wird durch Differenzation, welche beispielsweise numerisch erfolgen kann, eine Fahrzeugbeschleunigung $a_{ref}$ errechnet bzw. erzeugt. Diese Fahrzeugbeschleunigung wird dann erfindungsgemäß mit einer Fahrzeugbeschleunigung von anderen Sensoren in Beziehung gesetzt. Wenn es erforderlich erscheint, kann eine Plausibilitätsbeurteilung der aus den Radgeschwindigkeiten ermittelten Fahrzeugbeschleunigung erfolgen. Ist eine Plausibilität vorhanden, dass die vorliegende Fahrzeug-Referenzgeschwindigkeit nicht der tatsächlichen Fahrzeuggeschwindigkeit entspricht, so kann diese anhand der ermittelten Fahrzeugbeschleunigung (beispielsweise entweder direkt aus der abgeleiteten Fahrzeugreferenzgeschwindigkeit oder aus der Beschleunigung, die durch Sensoren festgestellt wird) extrapoliert werden. Hierzu wird beispielsweise entsprechend dem in der P 98938709.7 (P9071) und der unveröffentlichten Patentanmeldung P 19939979.4 (P9584) beschriebenen Verfahren eine Fahrzeugbeschleunigung möglichst genau abgeschätzt. Diese Extrapolation kann jedoch nur dann unkorrigiert erfolgen, wenn nicht gleichzeitig auf eine Bergauf- oder Bergabfahrt erkannt wird.

In der P 98938709.7 (P9071) wird bereits vorgeschlagen, das Fahren an einer Steigung oder im Gefälle bei der Korrektur bzw. Extrapolation der Fahrzeugreferenzgeschwindigkeit zu berücksichtigen. Dies erfolgt gemäß dem bekannten Verfahren dadurch, daß nur dann auf Überdrehen der Räder erkannt wird, wenn sich die Winkelgeschwindigkeiten und/oder Winkelbeschleunigungen der Räder um bestimmte Mindestbeträge voneinander unterscheiden, oder anders ausgedrückt, wenn die genannten Werte nicht innerhalb eines bestimmten Wertebandes liegen. Hierbei wird die Erfahrungstatsache ausgenutzt, daß das Durchdrehen der Räder nicht symmetrisch erfolgt, sondern eher unkoordiniert, so daß deutliche Werteunterschiede auftreten.

Gemäß der vorliegenden Erfindung treten jedoch bei heutigen Allradfahrzeugen, insbesondere solche Fahrzeuge, die mit einer im wesentlichen starren Allrad-Kupplung (beispielsweise Haldex-Kupplung) ausgestattet sind, auch in gleichem Maße durchdrehende Räder auf, so daß das bekannte Verfahren bei diesen Fahrzeugen nicht mehr funktioniert.

Bei einem Kraftfahrzeug mit Allradantrieb kann es sein, dass über einen längeren Zeitraum hinweg die aus den Raddrehzahlsignalen bestimmte Fahrzeugreferenzgeschwindigkeit nicht der tatsächlichen Fahrzeuggeschwindigkeit entspricht, da auf rutschigem Untergrund alle hierfür verwendbaren Räder durchdrehen. Im Falle durchdrehender Räder hängt die Fahrzeugbeschleunigung maßgeblich vom Reibkoeffizient $\mu$ der einzelnen Räder ab. Der Reibkoeffizient $\mu$ läßt sich beispielsweise nach der Formel

$$\mu = \frac{M_{mot} - J * \dot{\omega}}{F_N * r_R}$$

berechnen, wobei $\omega$ die Winkelbeschleunigung, J das Trägheitsmoment eines einzelnen Rades, $M_{mot}$ das Motoroment, $F_N$ die Normalkraft des Fahrzeugs und $r_R$ der Radradius ist.

Der Zusammenhang zwischen Motormoment, Trägheitsmoment der Räder und der Kraftübertragung läßt sich besonders einfach mittels einer Wertetabelle für einen bestimmten Fahrzeugtyp festlegen. Wie in der P 19939979.4 (P9584) beschrieben, enthält diese Tabelle jeweils einem Motormoment zugeordnete Beschleunigungswerte und ggf. einer Spalte, mit der die eingelegten Getriebestufe des Fahrzeugs berücksichtigt werden kann, sodaß auf die mögliche Beschleunigung des Fahrzeugs zurückgeschlossen und die Fahrzeugreferenzgeschwindigkeit extrapoliert werden kann. Wie bereits erwähnt, kann bei einer Bergauf- oder Bergabfahrt, die Extrapolation der Fahrzeuggeschwindigkeit nicht genau genug erfolgen. Um zu einer zuverlässig bestimmten (abgesicherten) Referenzgeschwindigkeit zu kommen, wird daher insbesondere wenn eine Extrapolation bereits über einen längeren Zeitraum hinweg vorgenommen wurde, erfindungsgemäß bevorzugt eine Achse oder ein Rad des Fahrzeugs vom Antrieb abgekoppelt und das Laufverhalten der abgekoppelten Achse oder des Rades überprüft. Verlangsamt sich die Radgeschwindigkeit des oder der abgekoppelten Räder soweit, daß diese geringer ist, als die Fahrzeugreferenzgeschwindigkeit $V_{ref}$, so liegt die ermittelte Fahrzeugreferenzgeschwindigkeit ist zu hoch. In diesem Fall muss die Fahrzeugreferenzgeschwindigkeit zu niedrigeren Werten hin korrigiert werden. Dies kann beispielsweise kontinuierlich oder bevorzugt in diskreten Schritten durch zuaddieren eines Korrekturwerts K erfolgen.

Erfindungsgemäß wird die aus der Fahrzeugreferenzgeschwindigkeit $V_{ref}$ abgeleitete Fahrzeugbeschleunigung $a_{ref}$ mit dem Wert eines Längsbeschleunigungssensors $a_L$ verglichen. Anhand dieses Vergleichs lässt sich feststellen, ob das Fahrzeug eine Normalfahrtabweichung aufweist oder nicht. Eine Normalfahrtabweichung liegt dann vor, wenn der Betrag von $a_L - a_{ref}$ größer ist, als ein fester Schwellenwert SL, wobei SL > als 0 ist. Eine Normalfahrtabweichung entsteht beispielsweise dann, wenn das Fahrzeug längere Zeit bergauf oder bergab fährt. Aber auch kürzere Beschleunigungen der Räder können zu einer Normalfahrtabweichung führen, die jedoch nur im Falle einer über einen längeren Zeitraum hinweg vorliegenden Bergauf- oder Bergabfahrt von Bedeutung ist. Daher wird erfindungsgemäß eine Abweichungszeit t gemessen, innerhalb der die Normalfahrtabweichung stattgefunden haben muss. Zur Erkennung, ob eine Bergauf- oder Bergabfahrt vorliegt, wird der Wert der Abweichungszeit t überprüft und auf Bergauf- oder Bergabfahrt erkannt, wenn die Zeit t einen Mindestwert überschritten hat.

Vorzugsweise wird jeweils eine Abweichungszeit $t_1$ für Bergauffahrt und eine Abweichungszeit $t_2$ für Bergabfahrt bestimmt. Hierbei gibt $t_1$ die Dauer an, in der die logische Gleichung $a_{ref} - SL > a_L$ erfüllt ist. Die Zeit $t_2$ gibt an, wie lange die logische Gleichung $a_{ref} + SL < a_L$ erfüllt ist. Auf diese Weise lässt sich eine Unterscheidung zwischen Bergauf- und Bergabfahrt besonders einfach vornehmen.

Wird gemäß der Erfindung eine Bergauf- oder Bergabfahrt erkannt, so kann dies vorzugsweise eine Korrektur der Antriebsleistung zur Folge haben, insbesondere eine Motormomenten-Änderung oder einer Weitergabe eines entsprechenden Steuersignals durch das elektronische System an die Antriebseinheit.

Das erfindungsgemäße Verfahren kann in Allradfahrzeugen sowie Fahrzeugen mit nur einer angetriebenen Achse durchgeführt werden. Bei einem Fahrzeug ohne nicht angetriebene Achsen (Allradfahrzeug) wird vorzugsweise im Falle durchdrehender Räder unter Berücksichtigung einer ggf. vorliegenden Bergauf- oder Bergabfahrt die Fahrzeugreferenzgeschwindigkeit $V_{ref}$ unter Zuhilfenahme des Grades der Bergauf- oder Bergabfahrt extrapoliert wird, wobei die Extrapolation von $V_{ref}$ in Richtung von $V_t$ vorgenommen wird.

Zur Kontrolle (Absicherung) der Fahrzeugreferenzgeschwindigkeit $V_{ref}$ wird vorzugsweise eine angetriebene Achse vom Antrieb abgekoppelt und aus dem Verhalten dieser nicht angetriebenen Achse auf die tatsächliche Fahrzeuggeschwindigkeit geschlossen. Verlangsamt sich die nicht angetriebene Achse nach dem Abkoppeln bis unter $V_{ref}$, so liegt im allgemeinen die Fahrzeug-Referenzgeschwindigkeit zu hoch. Verändert sich jedoch die Drehzahl der Räder an der abgekoppelten Achse nicht, so wird die Fahrzeugreferenzgeschwindigkeit im allgemeinen zu niedrig sein, was auf Bergabfahrt schließen läßt.

Wird die Fahrzeugreferenzgeschwindigkeit $V_{ref}$ korrigiert, so lässt sich dies vorzugsweise dadurch bewerkstelligen, dass zu $V_{ref}$ iterativ ein Korrekturwert K hinzuaddiert wird. Der Korrekturwert K kann je nachdem, aus welcher Richtung $V_{ref}$ an die tatsächliche Fahrzeuggeschwindigkeit angenähert werden muß, entweder positiv oder negativ sein. Wie bereits weiter oben erwähnt, wird der Wert von K, je nachdem ob Bergauf- oder Bergabfahrt vorliegt, in geeigneter Weise korrigiert. Vorzugsweise hat K einen Wert von etwa 0,1 g bis etwa 0,3 g.

Der Schwellenwert SL, der einer Beschleunigung entspricht, beträgt vorzugsweise zwischen etwa 0,02 g und 0,2 g, insbesondere zwischen etwa 0,04 g und 0,12 g, wobei die Fallbeschleunigung g = 9,81 ms$^{-2}$ ist. Ein Wert von beispielsweise 0,08 g entspricht einer Steigung von 8 %. Der in der Vorrichtung enthaltene Zähler wird demzufolge immer dann um den Wert 1 inkrementiert, wenn eine Normalfahrtabweichung mit einer durch die Elektronik erkannten Wahrscheinlichkeit für Bergauffahrt vorliegt, wobei beispielsweise die Erhöhung um 1 einer Zeit von 7 ms entsprechen kann. Liegt eine Normalfahrtabweichung mit durch die Elektronik erkannter Bergabfahrt vor, so wird der Zähler für Bergabfahrterkennung um den Wert 1 inkrementiert. Sind zu einem Messzeitpunkt die beiden oben genannten Bedingungen für Bergauf- oder Bergabfahrt nicht mehr erfüllt, so wird vorzugsweise der Counter wieder um den Wert 1 dekrementiert oder besonders bevorzugt auf den Wert 0 gesetzt. Hierbei ist ein negativer Wert für den Zähler ausgeschlossen.

Wenn sich die Normalfahrtabweichung, welche eine Art Wahrscheinlichkeit für Bergauf- bzw. Bergabfahrt angibt, durch einen hohen Zählerwert bestätigt hat, so kann diese Information als Zustandsänderung beispielsweise mithilfe eines digitalen Ausgangs an die Umgebung weitergeleitet werden. Hierfür kann beispielsweise der oder die Zähler auf das Überschreiten eines bestimmten Schwellenwertes, z.B. 200 (entspricht bei einer Einheit von 7 ms pro Zähleinheit einer Zeit von 1.400 ms), überprüft werden. Wird dieser Schwellenwert überschritten, so werden die zuvor geschilderten Maßnahmen eingeleitet.

Gemäß einer bevorzugten Ausführungsform der Erfindung wird bei einem allradgetriebenen Fahrzeug zur Absicherung der Fahrzeugreferenzgeschwindigkeit in einem allradgetriebenen Fahrzeug mindestens eines der Räder oder eine Achse vom Antriebsstrang abgekoppelt. Dies kann in den folgenden Situationen sinnvoll sein:

1. Die bezugnehmend auf alle Radsignale ermittelte oder extrapolierte Fahrzeugreferenzgeschwindigkeit liegt oberhalb der tatsächlichen Fahrzeuggeschwindigkeit $V_t$.
2. Die Fahrzeugreferenzgeschwindigkeit liegt unterhalb der tatsächlichen Fahrzeuggeschwindigkeit $V_t$.

Zur Erkennung dieser Situation ist es häufig notwendig, eine oder mehrere der nachfolgend genannten Bedingungen abzufragen:

- Aktivierung der Antriebsschlupfregelung (dieses Kriterium weist darauf hin, dass Antriebsschlupf erkannt wurde).

- Die Fahrzeugreferenzgeschwindigkeit wurde bereits über einen längeren Zeitraum hinweg modifiziert bzw. extrapoliert (dieses Kriterium liefert einen Hinweis darauf, ob die Fahrzeugreferenzgeschwindigkeit zunehmend unplausibel wird).

- Die tatsächliche Fahrzeugbeschleunigung ist kleiner als ein bestimmter Schwellenwert.

- Der Radschlupf ist größer als ein weiterer Schwellenwert (der Radschlupf kann beispielsweise durch Vergleichen der individuellen Raddrehzahlwerte mit dem Fahrzeugreferenzwert erkannt werden).

- Die Antriebsschlupfregelung des Motors bewirkt seit einer bestimmten Zeitdauer ununterbrochen Momentenzugabe, während gleichzeitig ein niedriger Fahrbahn-Reibwert erkannt wurde, oder sie befindet sich ununterbrochen im Zustand der Momentenreduktion.

Bevorzugt werden mehrere oder alle obigen Kriterien unverknüpft abgefragt. Eine Erhöhung der Fahrzeugreferenzgeschwindigkeit zur Anpassung ist nur in bestimmten Grenzen durch Extrapolation möglich. Zur Erkennung der Situation, bei der ein Abkoppeln einiger Räder vom Antrieb bei einem Allradantrieb notwendig ist, können mehrere oder alle der nachfolgend genannten Bedingungen überprüft werden, wobei diese vorzugsweise für einen Mindestzeitraum (z.B. 300 ms oder mehr) erfüllt sein müssen:

- Das Signal des Längsbeschleunigungssensors ist um ein bestimmtes Mindestmaß größer, als die aus den Radsignalen ermittelte Fahrzeugreferenzbeschleunigung. In diesem Fall liegt eine Bergauf-/Bergabfahrt vor.
- Das Motordrehmoment muss größer als der Wert NULL sein.
- Die Radbeschleunigungen und/oder die Radgeschwindigkeiten aller Räder müssen stabiles Radverhalten zeigen (Radbeschleunigungen kleiner als Schwellenwert).
- Die Radgeschwindigkeiten der Räder müssen oberhalb der Fahrzeug-Referenzgeschwindigkeit liegen.

Das Abkoppeln der Räder wird vorzugsweise für eine Dauer von weniger als 2000 ms, insbesondere für eine Dauer von etwa 300 bis 1000 ms, durchgeführt. Die Zeitdauer der Abtrennung des bzw. der Räder vom Antriebsstrang kann vorzugsweise 300 bis 1000 ms betragen. Vorzugsweise kann verfahrensmäßig vorgesehen sein, daß das Abkoppeln während eines bestimmten Zeitraums nicht zu häufig vorgenommen wird. Hierdurch läßt sich während des Fahrens auf niedrigen Reibwerten ein indifferentes Fahrzeugverhalten vermeiden.

Der Grad der Abweichung von $V_{ref}$ zu $V_t$ wird bevorzugt dadurch bestimmt, daß eine Annäherungszeit $t_K$ festgestellt wird, die benötigt wird, den Wert von $V_{ref}$ durch wiederholte Korrektur um den Korrekturwert K in Richtung des tatsächlichen Wertes für die Fahrzeuggeschwindigkeit $V_t$ zu aproximieren. Besonders bevorzugt läßt sich das erfindungsgemäße Verfahren dadurch erweitern, daß mit Hilfe der festgestellten Zeit $t_K$ festgestellt wird, ob eine Bergauf- oder Bergabfahrt vorgelegen hat. Bergauf- oder Bergabfahrt liegt insbesondere dann vor, wenn die Zeit $t_K$ einen bestimmten Schwellenwert überschritten hat. Dieser Schwellenwert liegt vorzugsweise in einem Bereich von etwa 40 bis 100 ms.

Unter dem Begriff "aproximieren" wird erfindungsgemäß das Annähern eines Wertes an einen anderen Wert verstanden, wobei der zu erreichende Wert nicht genau getroffen werden muß.

Die angenommene Fahrzeugbeschleunigung, die zur Beeinflussung der Fahrzeugreferenzgeschwindigkeit herangezogen wird, wird bevorzugt nach Maßgabe der Zeit $t_K$ in der Weise verändert, daß je höher die bestimmte Zeit $t_K$ ist, der Betrag des Korrekturwerts K erhöht wird.

Die Erfindung betrifft auch eine Vorrichtung zur Erkennung einer Bergauf- oder Bergabfahrt eines Kraftfahrzeugs gemäß Anspruch 9.

Vorzugsweise ist jeweils ein Zähler für Bergauffahrt ($t_1$) und Bergabfahrt (t2) vorgesehen.

Die Realisierung der vorstehend genannten Verfahren kann bevorzugt in einer geeignet programmierten computergestützten Steuerung erfolgen.

Die Erfindung hat den Vorteil, dass mit dem erfindungsgemäßen Verfahren insbesondere bei Fahrzeugen, die mit einem Regelungssystem zur Steuerung der Längsdynamik und/oder Querdynamik des Fahrzeugs ausgestattet sind (beispielsweise BTCS oder TCS, ebenso ESP) erkannt werden kann, ob das Fahrzeug bergauf oder bergab fährt. Durch Fahrten am Hang ergibt sich eine Änderung der Achslastverteilung, die bei einer Antriebsschlupfregelung die Motorregelung nachteilig beeinflusst. Durch das erfindungsgemäße Verfahren kann die Information der Bergauffahrt bzw. Bergabfahrterkennung zur verbesserten Motormomenten-Reduktion verwendet werden. Die Häufigkeit von Beschleunigungseinbrüchen, wie sie bei Antriebsschlupfregelungen bei Bergfahrt vorkommen können, wird stark verringert.

Weitere bevorzugte Ausführungsformen ergeben sich aus der nachfolgenden Figurenbeschreibung.

Es zeigt

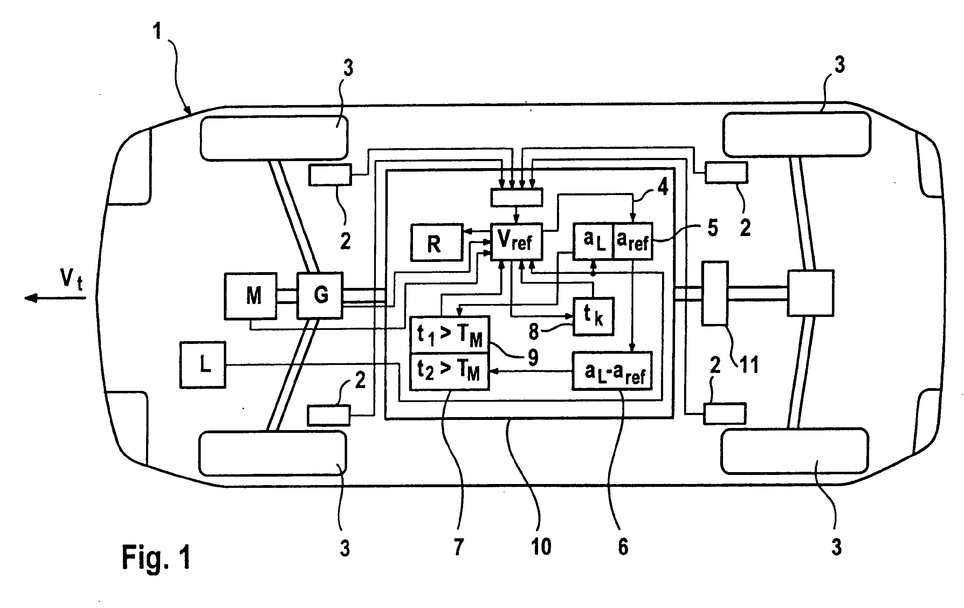

Fig. 1 eine schematische Darstellung eines Ausführungsbeispiels gemäß der Erfindung.

In Fig. 1 ist ein Kraftfahrzeug 1 dargestellt, welches sich mit der Fahrzeuggeschwindigkeit (tatsächliche Geschwindigkeit) $V_t$ fortbewegt. Die Radgeschwindigkeiten der Räder 3 werden durch Sensoren 2 gemessen und einer elektronischen Verarbeitungseinheit 10 zugeführt. In der Verarbeitungseinheit 10 erfolgt eine an sich bekannte Erzeugung einer Fahrzeugreferenzgeschwindigkeit $V_{ref}$. Die Fahrzeugreferenzgeschwindigkeit wird an andere Systeme, wie z. B. an das System R (ABS, ASR, ESP) weitergeleitet. Die Fahrzeugreferenzgeschwindigkeit kann anhand von Motordrehmomentdaten eines Motors M und Getriebedaten eines Getriebes G korrigiert bzw. extrapoliert sein. Aus der Fahrzeugreferenzgeschwindigkeit wird in Schritt 4 die Fahrzeugbeschleunigung $a_{ref}$ mit Verarbeitungseinheit 5 aus der Fahrzeugreferenzgeschwindigkeit gebildet. In der Einheit 6 wird ein Vergleich zwischen $a_L$ und $a_{ref}$ vorgenommen. Die Abweichungszeiten t, $t_1$, $t_2$ werden in Zählern in der Einheit 7 gespeichert. Wird ein Zeitschwellenwert $T_M$ überschritten, so führt dies zu einer Weiterleitung der Informationen "Bergauf- oder Bergabfahrt" an die Einheit zur Bestimmung der Fahrzeugreferenzgeschwindigkeit $V_{ref}$. Vorzugsweise enthält die Einheit 10 eine weitere Einheit 9 zur getrennten Erfassung von Bergauffahrt oder Bergabfahrt.

Die Verarbeitungseinheit 10 kann über eine Leitung auf eine Allrad-Kupplung 11 zugreifen. Wenn es erforderlich ist, läßt sich hierdurch eine Achse der angetriebenen Räder vom Motor M abkoppeln. Weiterhin ist eine Verarbeitungseinheit 8 vorgesehen, die die Zeit $t_k$ mißt, die benötigt wird, den Wert von $V_{ref}$ an die tatsächliche Fahrzeuggeschwindigkeit anzunähern.

**Patentansprüche**

1. Verfahren zur Erkennung einer Bergauf- oder Bergabfahrt eines Kraftfahrzeuges (1), welches sich mit der Geschwindigkeit $V_t$ fortbewegt, mit den Schritten:

   - Bestimmung einer Fahrzeugreferenzgeschwindigkeit $V_{ref}$ mittels Raddrehzahlsensoren (2), wobei $V_{ref}$ ggf. insbesondere im Falle von ausschließlich durchdrehenden Rädern (3) durch Extrapolation von Beschleunigungsdaten, Motordrehmomentdaten und/oder Informationen über die eingelegte Getriebestufe korrigiert sein kann,
   - Bestimmung einer Fahrzeugbeschleunigung $a_{ref}$ aus $V_{ref}$ durch Differentiation (4),
   - Vergleich von $a_{ref}$ mit einer sensorisch bestimmten Fahrzeuglängsbeschleunigung $a_L$,
   - Überprüfung, ob eine Normalfahrtabweichung vorliegt, indem überwacht wird, ob der Betrag der Differenz $a_L$
   - $a_{ref}$ größer ist, als ein Schwellenwert SL, wobei SL größer als Null ist (6),
   - Bestimmung einer Abweichungszeit t, innerhalb der die festgestellte Normalfahrtabweichung ununterbrochen vorliegt (7),
   - Überwachung der Abweichungszeit t auf Überschreiten eines Mindestzeitwertes $T_M$, wobei $T_M$ größer als Null ist, wobei auf Bergauf- oder Bergabfahrt geschlossen wird, wenn t größer als $T_M$ ist,

   **dadurch gekennzeichnet, daß** jeweils eine Abweichungszeit $t_1$ für Bergauffahrt und eine Abweichungszeit $t_2$ für Bergabfahrt bestimmt wird, wobei $t_1$ die Dauer angibt, in der die Gleichung $a_{ref} - SL > a_L$ erfüllt ist und $t_2$ die Dauer, in der $a_{ref} + SL < a_L$ erfüllt ist.

2. Verfahren nach Anspruch 1, **dadurch gekennzeichnet, daß** bei einem Allrad-Fahrzeug im Falle durchdrehender Räder unter Berücksichtigung einer ggf. vorliegenden Bergauf- oder Bergabfahrt die Fahrzeugreferenzgeschwindigkeit $V_{ref}$ unter Zuhilfenahme des Grades der Bergauf- oder Bergabfahrt extrapoliert wird, wobei die Extrapolation von $V_{ref}$ in Richtung von $V_t$ vorgenommen wird.

3. Verfahren nach Anspruch 2, **dadurch gekennzeichnet, daß** zur Kontrolle von $V_{ref}$ eine angetriebene Achse oder ein Rad vom Antrieb abgekoppelt wird und aus dem Verhalten der nichtangetriebenen Achse bzw. Räder auf die tatsächliche Fahrzeuggeschwindigkeit geschlossen wird.

4. Verfahren nach Anspruch 1 bis 3, **dadurch gekennzeichnet, daß** die Korrektur von $V_{ref}$ **dadurch** erfolgt, daß zu $V_{ref}$ iterativ ein positiver oder negativer Korrekturwert K hinzuaddiert wird, wobei die Korrektur in entgegengesetzte Richtung zur festgestellten Abweichung erfolgt.

5. Verfahren nach Anspruch 4, **dadurch gekennzeichnet, daß** bei der Extrapolation der Fahrzeugreferenzgeschwindigkeit $V_{ref}$ berücksichtigt wird, ob Bergauf- oder Bergabfahrt vorliegt, wobei die Erkennung, ob Bergauf- oder Bergabfahrt vorliegt mit dem Verfahren gemäß mindestens einem der Ansprüche 1 bis 4 durchgeführt wird.

6. Verfahren nach mindestens einem der Ansprüche 3 bis 5, **dadurch gekennzeichnet, daß** das Abkoppeln für eine Dauer von weniger als 2000 ms erfolgt.

7. Verfahren nach mindestens einem der Ansprüche 4 bis 6, **dadurch gekennzeichnet, daß** der Grad der Abweichung von $V_{ref}$ zu $V_t$ **dadurch** bestimmt wird, daß eine Annäherungszeit $t_K$ festgestellt wird (8), die benötigt wird, den Wert von $V_{ref}$ durch wiederholte Korrektur um den Korrekturwert K in Richtung des tatsächlichen Wertes für die Fahrzeuggeschwindigkeit $V_t$ zu aproximieren.

8. Verfahren nach mindestens einem der Ansprüche 4 bis 7, **dadurch gekennzeichnet, daß** die angenommene Fahrzeugbeschleunigung, die zur Beeinflussung der Fahrzeugreferenzgeschwindigkeit herangezogen wird, nach Maßgabe der Zeit $t_K$ in der Weise verändert wird, daß je höher die bestimmte Zeit $t_K$ ist, der Betrag des Korrekturwerts K erhöht wird.

9. Vorrichtung zur Erkennung einer Bergauf- oder Bergabfahrt eines Kraftfahrzeugs, welche Raddrehzahlsensoren (2) zur Erfassung der Radgeschwindigkeiten, einen Längsbeschleunigungssensor zur Erfassung einer Fahrzeuglängsbeschleunigung $a_L$, eine elektronische Verarbeitungseinheit (10) zur Erzeugung einer Fahrzeugreferenzgeschwindigkeit $V_{ref}$, eine Verarbeitungseinheit (5) zur Bestimmung einer Fahrzeugbeschleunigung $a_{ref}$, eine Einheit (6) zum Vergleich der Fahrzeuglängsbeschleunigung $a_L$ mit der Fahrzeugbeschleunigung $a_{ref}$ und eine digitale Logik zur Messung von Abweichungszeiten $t$, $t_1$, $t_2$ und einer Annäherungszeit $t_K$, wobei ein Digit der Logik einer fest vorgegebene Zeiteinheit entspricht, umfaßt, **dadurch gekennzeichnet, daß** jeweils ein Zähler (7,9) für Bergauffahrt und Bergabfahrt vorgesehen ist, in welchen die Messung der Zeiten $t$, $t_1$, $t_2$ und $t_K$ durch eine digitale Logik vorgenommen wird.

**Claims**

1. A method for detecting that a motor vehicle (1) moving at the speed $V_t$ is climbing or descending a slope, including the following steps:

   - determining a vehicle reference speed $V_{ref}$ by means of wheel speed sensors (2), wherein $V_{ref}$, if necessary, can be corrected through extrapolation of acceleration data, engine torque data, and/or information on the gear level that is engaged, especially when wheels (3) are spinning exclusively,
   - determining a vehicle acceleration $a_{ref}$ from $V_{ref}$ by means of differentiation (4),
   - comparing $a_{ref}$ with a vehicle longitudinal acceleration $a_L$ determined by sensors,
   - checking whether there is deviation from normal driving by monitoring whether the value of the difference $a_L$ - $a_{ref}$ is greater than a threshold value SL, with SL being greater than zero (6),
   - determining a deviation time $t$, within which the detected deviation from normal driving prevails uninterruptedly (7),
   - monitoring whether the deviation time $t$ exceeds a minimum time value $T_M$, with $T_M$ being greater than zero, and concluding that the vehicle is driving uphill or downhill when $t$ is greater than $T_M$,

   **characterized in that** one deviation time $t_1$ for driving uphill and one deviation time $t_2$ for driving downhill is determined respectively, $t_1$ indicating the time period during which the equation $a_{ref}$ - SL > $a_L$ is satisfied and $t_2$ indicating the time period during which $a_{ref}$ + SL < $a_L$ is satisfied.

2. A method as claimed in claim 1,
   **characterized in that** in case the wheels in an all-wheel vehicle are spinning, and taking into account that the vehicle is driving uphill or downhill, if applicable, the vehicle reference speed $V_{ref}$ is extrapolated on the basis of the degree of the uphill or downhill slope, and $V_{ref}$ is extrapolated in the direction of $V_t$.

3. A method as claimed in claim 2,
   **characterized in that** a driven axle or a wheel is disconnected from the drive to check $V_{ref}$ and conclusions regarding the actual vehicle speed are drawn from the behaviour of the non-driven axle or wheels, respectively.

4. A method as claimed in claims 1 to 3,
   **characterized in that** $V_{ref}$ is corrected by iteratively adding a positive or negative correction value K to $V_{ref}$, with the correction being made in the direction opposite to the determined deviation.

5. A method as claimed in claim 4,
   **characterized in that** the extrapolation of the vehicle reference speed $V_{ref}$ takes into account whether the vehicle is climbing or descending a slope, and the detection of driving uphill or downhill is executed by means of the method as claimed in at least one of claims 1 to 4.

6. A method as claimed in at least one of claims 3 to 5,
   **characterized in that** the disconnection lasts for a period of less than 2000 ms.

7. A method as claimed in at least one of claims 4 to 6,
   **characterized in that** the degree of deviation between $V_{ref}$ and $V_t$ is determined by obtaining an approximation time $t_K$ (8), which is needed to approximate the value of $V_{ref}$ in the direction of the actual value of the vehicle speed $V_t$ by correcting it repeatedly by the correction value K.

8. A method as claimed in at least one of claims 4 to 7,
**characterized in that** the assumed vehicle acceleration used for influencing the vehicle reference speed is changed according to time $t_K$ in such a way that the value of the correction value K is increased in proportion to the value of the determined time $t_K$.

9. A device for detecting uphill or downhill driving of a motor vehicle, which comprises wheel speed sensors (2) for sensing the wheel speeds, a longitudinal acceleration sensor for sensing a vehicle longitudinal acceleration $a_L$, an electronic processing unit (10) for generating a vehicle reference speed $v_{ref}$, a processing unit (5) for determining a vehicle acceleration $a_{ref}$, a unit (6) for comparing the vehicle longitudinal acceleration $a_L$ with the vehicle acceleration $a_{ref}$, and a digital logic for measuring deviation times t, $t_1$, $t_2$ and an approximation time $t_K$, with one digit of the logic corresponding to a defined time unit,
**characterized in that** each one counter (7, 9) for uphill driving and downhill driving is provided, wherein the measurement of the times, t, $t_1$, $t_2$ and $t_K$ is executed by a digital logic.

## Revendications

1. Procédé de reconnaissance d'un trajet en côte ou en descente d'un véhicule automobile (1) qui se déplace à la vitesse $V_t$, comportant les étapes suivantes :

    - détermination d'une vitesse de référence $V_{ref}$ du véhicule au moyen de capteurs de vitesse de rotation des roues (2), $V_{ref}$ pouvant être éventuellement corrigée, en particulier dans le cas de roues (3) patinant exclusivement, par extrapolation de données d'accélération, de données du couple de rotation du moteur et/ou d'informations relatives au rapport de transmission engagé,
    - détermination d'une accélération $a_{ref}$ du véhicule à partir de $V_{ref}$ par différenciation (4),
    - comparaison de $a_{ref}$ avec une accélération longitudinale $a_L$ du véhicule déterminée par des capteurs,
    - vérification de la présence d'un écart par rapport à une marche normale, en contrôlant si la valeur de la différence $a_L - a_{ref}$ est supérieure à une valeur de seuil SL, SL étant supérieure à zéro (6),
    - détermination d'un temps d'écart t à l'intérieur duquel l'écart de marche normale constaté est ininterrompu (7),
    - contrôle du temps d'écart t quant au dépassement d'une valeur de temps minimal $T_M$, $T_M$ étant supérieur à zéro, et lorsque t est supérieur à $T_M$ on conclut à une conduite en côte ou une conduite en descente,

    **caractérisé en ce qu'**on détermine un temps d'écart $t_1$ pour une conduite en côte et un temps d'écart $t_2$ pour une conduite en descente, $t_1$ indiquant la durée pendant laquelle l'équation $a_{ref} - SL > a_L$ et $t_2$ est la durée pendant laquelle $a_{ref} + SL < a_L$.

2. Procédé selon la revendication 1, **caractérisé en ce que** pour un véhicule toutes roues motrices et dans le cas où les roues patinent et en tenant compte d'une éventuelle conduite en côte ou en descente, on extrapole la vitesse de référence $V_{ref}$ du véhicule à l'aide du degré de la conduite en côte ou en descente, l'extrapolation de $V_{ref}$ étant effectuée en direction de $V_t$.

3. Procédé selon la revendication 2, **caractérisé en ce que** pour le contrôle de $V_{ref}$ un essieu moteur ou une roue est désaccouplée du moteur et à partir du comportement de l'essieu ou des roues de l'essieu non moteur ou des roues non motrices on remonte à la vitesse effective du véhicule.

4. Procédé selon les revendications 1 à 3, **caractérisé en ce que** la correction de $V_{ref}$ s'effectue **en ce qu'**on ajoute de manière itérative à $V_{ref}$, une valeur de correction K positive ou négative, la correction s'effectuant dans le sens opposé à l'écart constaté.

5. Procédé selon la revendication 4, **caractérisé en ce que** pour l'extrapolation de la vitesse de référence $V_{ref}$ du véhicule, on tient compte du fait que l'on est en présence d'une conduite en côte ou en descente, la reconnaissance de la conduite en côte ou en descente étant exécutée avec le procédé selon l'une au moins des revendications 1 à 4.

6. Procédé selon l'une au moins des revendications 3 à 5, **caractérisé en ce que** le découplage s'effectue pour une durée de moins de 2 000 ms.

7. Procédé selon l'une au moins des revendications 4 à 6, **caractérisé en ce que** le degré de l'écart entre $V_{ref}$ et $V_t$ est déterminé en définissant (8) un temps d'approximation $t_K$ qui est nécessaire pour approcher la valeur de $V_{ref}$, par correction répétée de la valeur de correction K, de la valeur effective de la vitesse $V_t$ du véhicule.

8. Procédé selon l'une au moins des revendications 4 à 7, **caractérisé en ce que** l'accélération admise du véhicule, qui est utilisée pour influencer la vitesse de référence du véhicule, est modifiée en fonction du temps $t_K$ de manière que plus le temps $t_K$ déterminé est élevé, plus on augmente la grandeur de la valeur de correction K.

9. Dispositif pour reconnaître une conduite en côte ou en descente d'un véhicule automobile, qui comprend des capteurs de vitesse de rotation des roues (2) pour détecter les vitesses des roues, un capteur d'accélération longitudinale pour détecter une accélération longitudinale $a_L$ du véhicule, une unité de traitement électronique (10) pour produire une vitesse de référence $V_{ref}$ du véhicule, une unité de traitement (5) pour déterminer une accélération $a_{ref}$ du véhicule, une unité (6) pour comparer l'accélération longitudinale $a_L$ du véhicule à l'accélération $a_{ref}$ du véhicule et une logique numérique pour la mesure de temps d'écart t, $t_1$, $t_2$ ainsi que d'un temps d'approximation $t_K$, un digit de la logique correspondant à une unité de temps prédéfinie fixe, **caractérisé en ce qu'**il est prévu un compteur (7, 9) pour la conduite en côte et pour la conduite en descente dans lequel la mesure des temps t, $t_1$, $t_2$ et $t_K$ est assurée par une logique numérique.

Fig. 1

$V_t$

M
G
L
R
$V_{ref}$
$a_L$ $a_{ref}$
$t_k$
$t_1 > T_M$
$t_2 > T_M$
$a_L - a_{ref}$

1
2
3
4
5
6
7
8
9
10
11

EP 1 210 256 B1